# EUROPEAN PATENT APPLICATION

(11) **EP 4 538 023 A1**
(43) Date of publication of application: **16.04.2025**
(21) Application number: 23819424.5
(22) Date of filing: 03.02.2023
(51) Int. Cl.: B29C 64/255, B22F 10/14, B22F 10/73, B22F 12/55, B28B 1/30, B29C 64/165, B29C 64/357, B33Y 30/00

(54) **THREE-DIMENSIONAL SHAPING APPARATUS**

(30) Priority: 08.06.2022 JP 2022093200
(71) Applicant: Roland DG Corporation, Hamamatsu-shi, Shizuoka 431-2103 (JP)
(72) Inventor: IWASE, Fumiyoshi, Hamamatsu-shi, Shizuoka 431-2103 (JP)
(74) Representative: Grünecker Patent- und Rechtsanwälte PartG mbB
(86) International application number: PCT/JP2023/003547
(87) International publication number: WO 2023/238436

(57) **Abstract**

The present invention reduces the burden of and increases the efficiency of the work of collecting a powder material from a shaping tank into a supply tank. A three-dimensional shaping apparatus **100** includes: a shaping tank **20** for shaping a three-dimensional shaped object **92;** a shaping table **24;** a supply tank **30** for supplying a powder material **90;** and a first partition **80** that is provided on the shaping tank **20** and that extends upward relative to an upper position of the shaping table **24.** As the shaping table **24** is raised after completion of the shaping of the three-dimensional shaped object **92,** the powder material **90** is raised to a relatively high position while being prevented from spilling by the first partition **80.** The operator can easily return the powder material **90** to the supply tank **30** by pushing the powder material **90** to one side in the horizontal direction. This eliminates the need for the work of lifting a scoop or the like from inside the shaping tank **20.**

## Description

### TECHNICAL FIELD

The present invention relates to a three-dimensional shaping apparatus.

### BACKGROUND ART

Three-dimensional shaping apparatuses using powder materials have been known in the art (see, for example, PTL 1 and PTL 2). A three-dimensional shaping apparatus includes a supply tank for supplying a powder material and a shaping tank for shaping a three-dimensional shaped object. The powder material supplied from the supply tank is bedded in the shaping tank to form a powder material layer. The hardening liquid is discharged onto this powder material layer to form a hardened layer with a desired cross-sectional shape. This operation is repeated multiple times, thereby stacking hardened layers to form a three-dimensional shaped object. The three-dimensional shaped object thus formed is buried in excess powder material that is left unhardened in the shaping tank. The three-dimensional shaped object is taken out by removing the excess powder material. The excess powder material is then collected from the shaping tank into the supply tank using a scoop or the like.

### CITATION LIST

### PATENT LITERATURE

PTL 1: JP 2016-221875 A
PTL 2: JP 2017-196890 A

### SUMMARY OF INVENTION

### TECHNICAL PROBLEM

However, the process of collecting the powder material in the supply tank by the user using a scoop or the like involves lifting the scoop or the like from inside the shaping tank, which is a large burden on the operator and is inefficient.

The present invention has been made in view of the above, and an object thereof is to reduce the burden of and increase the efficiency of the work of collecting the powder material from the shaping tank into the supply tank after completion of the shaping of a three-dimensional shaped object.

### SOLUTION TO PROBLEM

A three-dimensional shaping apparatus according to the present invention is a three-dimensional shaping apparatus for shaping a three-dimensional shaped object using a powder material. The three-dimensional shaping apparatus includes: a supply tank that supplies the powder material; a shaping tank having a shaping space in which the powder material is accommodated and the three-dimensional shaped object is shaped; a shaping table that is arranged in the shaping tank and on which the powder material is placed; an elevation device that is arranged in the shaping tank and that raises and lowers the shaping table; and a first partition that is provided on the shaping tank and that extends in a horizontal direction relative to the shaping tank and extends upward relative to an upper position of the shaping table. The powder material supplied from the supply tank is bedded in the shaping tank to form a powder material layer. A hardening liquid is discharged onto the powder material layer to form a hardened layer. This operation is repeated, thereby stacking hardened layers to form a three-dimensional shaped object.

With the three-dimensional shaping apparatus of the present invention, if the shaping table is raised by the elevation device after completion of the shaping of the three-dimensional shaped object, the powder material that is left unhardened is raised together with the shaping table. After the shaping table is raised, since the powder material is at a relatively high position, the powder material can be easily returned to the supply tank by, for example, pushing the powder material to one side in the horizontal direction with a scoop or the like. There is no need for the work of lifting a scoop or the like from inside the shaping tank. Thus, it is possible to reduce the burden of and increase the efficiency of the work of collecting the powder material in the supply tank. Note that when the powder material is raised together with the shaping table, there is concern that the powder material may spill out of the shaping tank. However, with the three-dimensional shaping apparatus of the present invention, the first partition that extends upward relative to the upper position of the shaping table is provided on the shaping tank. The powder material is prevented by the first partition from spilling out of the shaping tank. Thus, it is possible to easily collect the powder material in the supply tank without spilling the powder material.

### EFFECTS OF INVENTION

The present invention reduces the burden of and improves the efficiency of the work of collecting the excess powder material from the shaping tank into the supply tank after completion of the shaping of a three-dimensional shaped object.

### BRIEF DESCRIPTION OF DRAWINGS

FIG. 1 is a perspective view of a three-dimensional shaping apparatus according to one embodiment.
FIG. 2 is a vertical sectional view of the three-dimensional shaping apparatus according to one embodiment.
FIG. 3 is a plan view of the three-dimensional shaping apparatus according to one embodiment.
FIG. 4 is a perspective view of a partition according to one embodiment.
FIG. 5 is a vertical sectional view of the three-dimensional shaping apparatus showing the state where the shaping of a three-dimensional shaped object is completed.

### DESCRIPTION OF EMBODIMENTS

A three-dimensional shaping apparatus according to one embodiment of the present invention will now be described with reference to the drawings. Note that, needless to say, the present embodiment described herein is not intended to limit the present invention in any particular way. Members and sections of like functions are denoted by like reference signs, and redundant explanations will be omitted or simplified as appropriate.

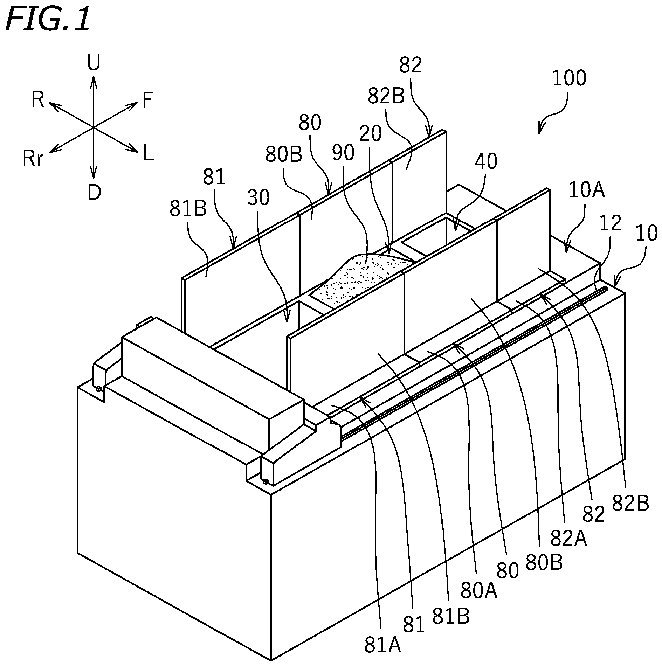

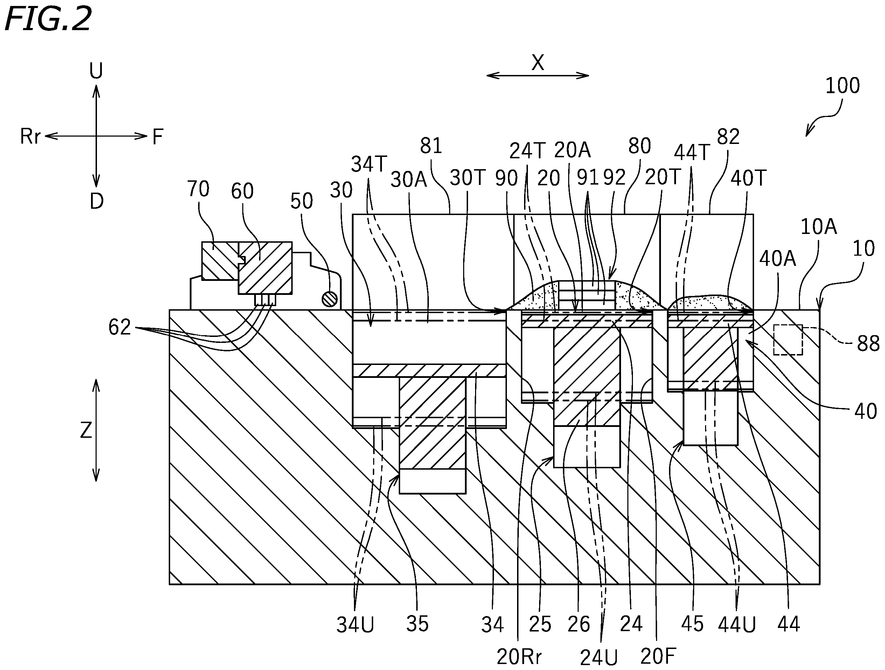

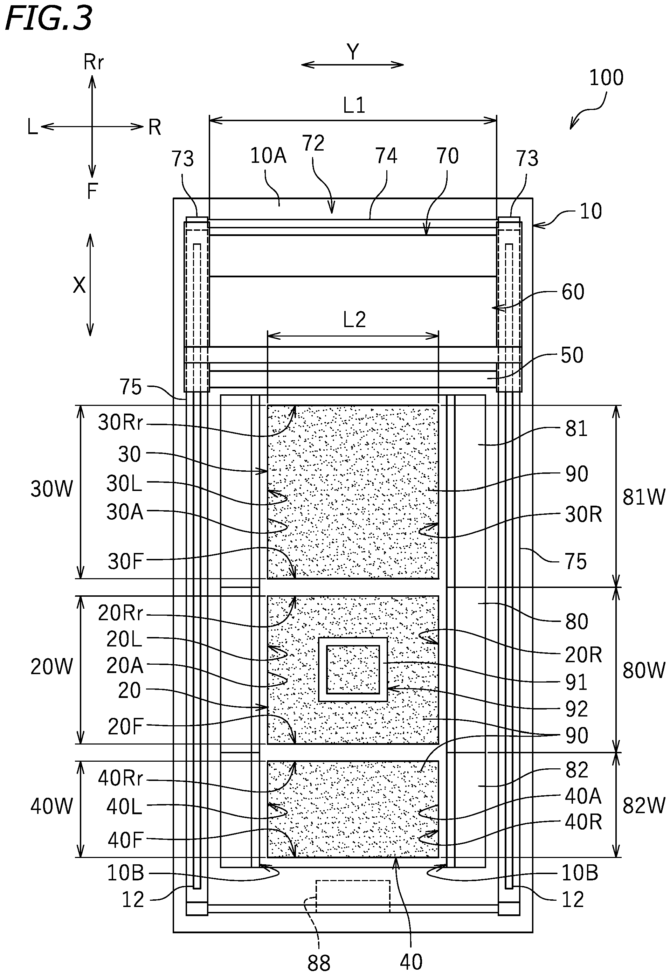

FIG. 1 is a perspective view of a three-dimensional shaping apparatus **100** according to the present embodiment. FIG. 2 is a vertical sectional view of the three-dimensional shaping apparatus **100** according to of the present embodiment. FIG. 3 is a plan view of the three-dimensional shaping apparatus **100** according to the present embodiment. For the sake of illustration, the direction of the three-dimensional shaping apparatus **100** will be defined as follows in the following description. Reference sign F in the drawings denotes forward, and reference sign Rr denotes rearward. Left, right, up and down of the three-dimensional shaping apparatus **100** denote those directions as the three-dimensional shaping apparatus **100** is viewed from the front. Reference signs L, R, U and D in the drawings denote left, right, up and down, respectively. Reference signs X, Y and Z denote the front-rear direction, the left-right direction and the up-down direction, respectively. As described later in detail, the up-down direction Z coincides with the stacking direction of hardened layers 91 (see FIG. 2) in three-dimensional shaping. Note however that these directions are defined only for the sake of illustration and do not limit in any way how the three-dimensional shaping apparatus **100** is installed.

As shown in FIG. 1 and FIG. 2, the three-dimensional shaping apparatus **100** is an apparatus for shaping a three-dimensional shaped object **92** by curing a powder material 90 with a hardening liquid to form hardened layers **91,** which are sequentially stacked together in the up-down direction Z. In the present embodiment, in the three-dimensional shaping apparatus **100,** based on a sectional image showing the cross-sectional shape of the desired three-dimensional shaped object **92,** the hardening liquid is discharged onto the powder material **90** to harden the powder material **90** to form hardened layers 91 in accordance with the sectional image. Then, the hardened layers **91** are sequentially stacked to shape the desired three-dimensional shaped object 92.

Note that "cross-sectional shape" as used herein refers to the shape of the cross section as the three-dimensional shaped object 92 is sliced in a predetermined direction (e.g., horizontal direction) at a predetermined thickness (typically, several 10 to 100 µm, e.g., 100 µm). The predetermined thickness may or may not be a constant thickness. Here, the up-down direction Z coincides with the stacking direction of the hardened layers 91 in the three-dimensional shaping.

There is no particular limitation on the powder material **90.** The type of the powder material **90** may be, for example, inorganic materials such as alumina, silica, titania, zirconia, silica, mullite, gypsum, semi-hydrated gypsum (α plaster, β plaster), glass, sand, gravel, cement, mortar, concrete, apatite, and the like, metal materials such as iron, aluminum, titanium and their alloys (such as stainless steel, titanium alloys, aluminum alloys), water-soluble resin materials such as polyvinyl alcohol (PVA), polyvinyl pyrrolidone (PVP), water-soluble acrylic resin, water-soluble urethane resin, water-soluble polyamide, plastics, salt, etc. Note that "cement" above includes Portland cement, alumina cement, magnesia cement, phosphate cement, blast furnace cement, silica cement, fly ash cement, etc. The powder material may be a sinterable material that transforms into a dense sintered material with a relative density of 90% or greater through sintering at generally 500°C or higher, typically 700 to 2000°C, e.g., 1000 to 1500°C. The powder material **90** may be composed of any one of the above materials or a combination of two or more thereof.

The powder material **90** may be made only of the components mentioned above, or may contain other components in addition to the components mentioned above. For example, it may contain a component mentioned above as the first component, and a material that promotes or assists in the bonding between particles of the first component. The powder material **90** may be, for example, a mixed powder containing an inorganic material mentioned above and a water-soluble binder resin. The water-soluble binder resin is a polymer compound that has solubility in water and exhibits a binding property and an adhesive property when moistened. Examples of the water-soluble binder resin include water-soluble polyvinyl alcohol resins, water-soluble polyvinyl pyrrolidone resins, water-soluble acrylic resins, water-soluble urethane resins, water-soluble polyamides, starch, cellulose, cellulose derivatives, and waxes.

There is no particular limitation on the hardening liquid, and it may be a liquid (including a viscous material) capable of adhering the particles of the powder material **90.** The hardening liquid may be, for example, a liquid containing water, wax, binder resin, starch, etc.

As shown in FIG. 2, the three-dimensional shaping apparatus **100** includes a housing **10,** a shaping tank **20,** a supply tank **30,** a collection tank **40,** a shaping table **24,** a supply table **34,** a collection table **44,** a first elevation device **25,** a second elevation device **35,** a third elevation device **45,** a bedding member **50,** a head unit **60,** a support member **70, a** first partition **80,** a second partition **81,** a third partition **82,** and a controller **88.** The first partition **80,** the second partition **81,** and the third partition **82** are separate in the present embodiment, but two or all of them may be integrated. For example, the first partition **80,** the second partition **81,** and the third partition **82** may be a single component.

As shown in FIG. **1****,** FIG. **2****,** and FIG. **3****,** the housing **10** is an external body of the three-dimensional shaping apparatus **100.** The housing **10** has a shape in which the length in the front-rear direction X is longer than the length in the left-right direction Y. The housing **10** includes the collection tank **40,** the shaping tank **20,** and the supply tank **30,** in this order from front to back. The supply tank **30** is arranged on one side in the horizontal direction (here, on the rear side) of the shaping tank **20.** The collection tank **40** is arranged on the other side in the horizontal direction (here, the front side) of the shaping tank **20.** As shown in FIG. **1****,** the housing **10** has an upper surface **10A** located around the shaping tank **20,** the supply tank **30,** and the collection tank **40.** The upper surface **10A** is a flat surface. As shown in FIG. **3****,** the upper surface **10A** has mounting sections **10B** on the left side and the right side of the shaping tank **20,** the supply tank **30,** and the collection tank **40,** wherein the first partition **80,** the second partition **81,** and the third partition **82** are arranged on the mounting sections **10B.** The mounting sections **10B** are formed of a magnetic material. Here, the mounting sections **10B** are formed of a metal such as iron. The support member **70** is supported by the housing **10.** The support member **70** supports the head unit **60.**

As shown in FIG. 2 and FIG. 3, the shaping tank **20** is provided in the housing **10.** The shaping tank **20** is a tank having a first opening **20T** that is open upward. The shaping tank **20** has a front wall **20F,** a rear wall **20Rr,** a left wall **20L,** and a right wall **20R.** The shaping tank **20** has a shaping space **20A** inside. The shaping space **20A** accommodates the powder material **90** supplied from the supply tank **30.** In the shaping space **20A**, a hardening liquid is discharged from line heads **62** (see FIG. 2), to be described below, onto the powder material **90** to shape a three-dimensional shaped object **92.** The shaping tank **20** accommodates the three-dimensional shaped object **92** that has been shaped.

As shown in FIG. **2****,** the shaping table **24** is arranged inside the shaping tank **20.** The space surrounded by the front wall **20F,** the rear wall **20Rr,** the left **wall 20L,** the right wall **20R,** and the upper surface of the shaping table **24** of the shaping tank **20** is the shaping space **20A**. The shape of the shaping table **24** is, for example, a rectangular shape as viewed in plan view. The shaping table **24** is arranged horizontally. The powder material **90** is placed on the shaping table **24.** During the formation of the hardened layer **91,** the powder material **90** is stacked on the shaping table **24.** The three-dimensional shaped object **92** is formed on the shaping table **24.** The shaping table **24** is connected to the first elevation device **25.** The shaping table **24** is typically configured so that the shaping table **24** can be raised and lowered in the up-down direction Z inside the shaping tank **20** along the front wall **20F,** the rear wall **20Rr,** the left wall **20L,** and the right wall **20R** of the shaping tank **20.** The shaping table **24** is moved by the first elevation device **25** between the upper position **24T,** which is the upper end position of the elevation range, and the lower position **24U,** which is the lower end position of the elevation range.

As shown in FIG. **2****,** the first elevation device **25** is a device that raises and lowers the shaping table **24** in the up-down direction Z. The first elevation device **25** is provided in the housing **10.** There is no particular limitation on the configuration of the first elevation device **25.** For example, the first elevation device **25** includes a first support member **26,** a first motor (not shown), and a ball screw (not shown). The first support member **26** is connected to the lower surface of the shaping table **24.** The first support member **26** supports the shaping table **24** from below. The first support member **26** extends in the up-down direction Z. The first support member **26** is connected to the first motor via a ball screw. Driving the first motor causes the ball screw to rotate and the first support member **26** to move in the up-down direction Z. As a result, the shaping table **24** moves in the up-down direction Z. The first elevation device **25** is electrically connected to the controller **88** and is controlled by the controller **88.**

As shown in FIG. **2** and FIG. **3****,** the supply tank **30** is provided in the housing **10.** The supply tank **30** is a tank having a second opening **30T** that is open upward, and has a front wall **30F**, a rear wall **30Rr,** a left wall **30L,** and a right wall **30R.** The supply tank **30** has a storage space **30A** inside. The supply tank **30** stores the powder material **90** to be supplied to the shaping tank **20.**

As shown in FIG. 2, the supply table **34** is arranged inside the supply tank **30.** The space surrounded by the front wall **30F,** the rear wall **30Rr,** the left wall**30L,** the right wall **30R** of the supply tank **30,** and the upper surface of the supply table **34** is the storage space **30A**. The shape of the supply table **34** is, for example, a rectangular shape as viewed in plan view. The supply table **34** is arranged horizontally. The powder material **90** is placed on the supply table **34.** The supply table **34** is connected to the second elevation device **35.** The supply table **34** is typically configured so that the supply table **34** can be raised and lowered in the up-down direction Z inside the supply tank **30** along the front wall **30F,** the rear wall **30Rr,** the left wall **30L,** and the right wall **30R** of the supply tank **30.** The supply table **34** is moved by the second elevating device **35** between the upper position **34T,** which is the upper end position of the elevation range, and the lower position **34U,** which is the lower end position of the elevation range.

As shown in FIG. **2****,** the second elevating device **35** is a device that raises and lowers the supply table **34** in the up-down direction Z. There is no particular limitation on the configuration of the second elevating device **35.** Here, the second elevating device **35** has the same configuration as the first elevating device **25.** The second elevating device **35** is operated and controlled in the same manner as the first elevating device **25.**

As shown in FIG. **2** and FIG. **3****,** the collection tank **40** is provided in the housing **10.** The collection tank **40** is a tank having a third opening **40T** that is open upward, and has a front wall **40F**, a rear wall **40Rr,** a left wall **40L,** and a right wall**40R**. The collection tank **40** has a collection space **40A** in which the powder material **90** is collected. The collection tank **40** collects an excess amount of the powder material **90** having been supplied from the supply tank **30** to the shaping tank **20** (in other words, the excess powder material **90** that is not accommodated in the shaping space **20A**).

As shown in FIG. **2****,** the collection table **44** is arranged inside the collection tank **40.** The space surrounded by the front wall **40F,** the rear wall **40Rr,** the left wall **40L,** the right wall **40R** of the collection tank **40,** and the upper surface of the collection table **44** is the collection space **40A**. The shape of the collection table **44** is, for example, a rectangular shape as viewed in plan view. The collection table **44** is arranged horizontally. The powder material **90** is placed on the collection table **44.** The collection table **44** is connected to the third elevation device **45.** The collection table **44** is typically configured so that the collection table **44** can be raised and lowered in the up-down direction Z inside the collection tank **40** along the front wall **40F,** the rear wall **40Rr,** the left wall **40L,** and the right wall **40R** of the collection tank **40.** The collection table **44** is moved by the third elevating device **45** between the upper position **44T,** which is the upper end position of the elevation range, and the lower position **44U,** which is the lower end position of the elevation range.

As shown in FIG. **2****,** the third elevation device **45** is a device that raises and lowers the collection table **44** in the up-down direction Z. There is no particular limitation on the configuration of the third elevating device **45.** Here, the third elevating device **45** has the same configuration as the first elevating device **25.** The third elevating device **45** is operated and controlled in the same manner as the first elevating device **25.**

As shown in FIG. **2** and FIG. **3****,** the three-dimensional shaping apparatus **100** includes the head unit **60** that discharges a hardening liquid onto the powder material **90,** the support member **70** that supports the head unit **60,** and a moving mechanism **72** that moves the support member **70.** The moving mechanism **72** is a mechanism for moving the support member **70** relative to the housing **10** in the front-rear direction X.

As shown in FIG. **3****,** the moving mechanism **72** includes a guide rail **12** provided on the housing **10** that guides the movement of the support member **70** in the front-rear direction X, a pulley **73** arranged on the side of the guide rail **12,** a connecting rod **74** that connects the pulley **73,** a belt **75** wound around the pulley **73,** and a second motor (not shown) that rotates the connecting rod **74.** The second motor is electrically connected to the controller **88** and controlled by the controller **88.** When the second motor is driven, the connecting rod **74** rotates and the belt **75** runs. This causes the support member **70** to move in the front-rear direction X along the guide rail **12.** Note that in the figures other than FIG. **3****,** the pulley **73,** the connecting rod **74,** and the belt **75** are omitted.

As shown in FIG. **2****,** in the present embodiment, the head unit **60** includes three line heads **62** aligned in the front-rear direction X. The line heads **62** are devices that discharge a hardening liquid onto the powder material **90** accommodated in the shaping space **20A**. The line heads **62** are an example of discharge heads. The line head **62** has a plurality of nozzles (not shown) for discharging a hardening liquid. The plurality of nozzles are aligned straight in the left-right direction Y. There is no particular limitation on the method of discharging a hardening liquid for the line heads **62,** and the method is, for example, an inkjet method. The line heads **62** are arranged in the housing **10** so as to be located upward relative to the shaping tank **20.** The line heads **62** are electrically connected to the controller **88.** The discharge of a hardening liquid from the nozzles of the line heads **62** is controlled by the controller **88.**

As shown in FIG. **2****,** the bedding member **50** is arranged upward of the housing **10.** The bedding member **50** is supported by the head unit **60.** The bedding member **50** has a long cylindrical shape. The bedding member **50** is configured to be rotatable and arranged so that the axis of rotation is parallel to the left-right direction Y. As shown in FIG. 3, the length L1 in the left-right direction Y of the bedding member **50** is longer than the length L2 in the left-right direction Y of the supply tank **30.** When shaping the three-dimensional shaped object **92,** the shaping table **24** is lowered and the supply table **34** is raised by a predetermined thickness of the cross-sectional shape of the three-dimensional shaped object **92.** The bedding member **50** is moved forward by the moving mechanism **72,** thereby transporting the powder material **90** of a predetermined thickness placed on the supply table **34** to the shaping tank **20.** The bedding member **50** evens the surface of the powder material **90** transported to the shaping tank **20** to form a uniform powder material layer. Thus, the powder material **90** is bedded in the shaping space **20A**.

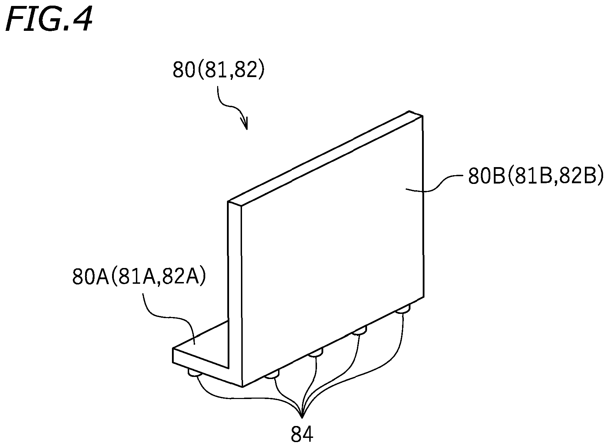

As shown in FIG. **1****,** FIG. **2****,** and FIG. **3****,** the first partition **80,** the second partition **81,** and the third partition **82** are arranged on the left and right mounting sections **10B** of the housing **10.** As shown in FIG. **4****,** the first partition **80,** the second partition **81,** and the third partition **82** respectively include horizontal portions **80A, 81A,** and **82A,** which are fixed to the mounting section **10B,** and vertical portions **80B, 81B,** and **82B,** which extend vertically upward relative to the horizontal portion **80A, 81A,** and **82A.** The first partition **80,** the second partition **81,** and the third partition **82** each have an L-letter shape. As shown in FIG. 1, the vertical portions **80B** of the left and right first partitions **80** are arranged flush with the left wall **20L** and the right wall **20R** of the shaping tank **20,** respectively. The vertical portions **81B** of the left and right second partitions **81** are arranged flush with the left wall **30L** and the right wall **30R** of the supply tank **30,** respectively. The vertical portions **82B** of the left and right third partitions **82** are arranged flush with the left wall **40L** and the right wall **40R** of the collection tank **40,** respectively.

As shown in FIG. **2****,** the vertical portion **80B** of the first partition **80** extends upward relative to the upper position **24T** of the shaping table **24** and upward relative to the first opening **20T** of the shaping tank **20.** Thus, the first partition **80** prevents the powder material **90** from spilling out of the shaping tank **20** when the shaping table **24** is raised. The vertical portion **81B** of the second partition **81** extends upward relative to the upper position **34T** of the supply table **34** and upward relative to the second opening **30T** of the supply tank **30.** Thus, the second partition **81** prevents the powder material **90** from spilling out of the supply tank **30** when the supply table **34** is raised. The vertical portion **82B** of the third partition **82** extends upward relative to the upper position **44T** of the collection table **44** and upward relative to the third opening **40T** of the collection tank **40.** Thus, the third partition **82** prevents the powder material **90** from spilling out of the collection tank **40** when the collection table **44** is raised. As shown in FIG. **3****,** the length **80W** in the front-rear direction of the first partition **80** is longer than the length **20W** in the front-rear direction of the shaping tank **20.** The length **81W** in the front-rear direction of the second partition **81** is longer than the length **30W** in the front-rear direction of the supply tank **30.** The length **82W** in the front-rear direction of the third partition **82** is longer than the length **40W** in the front-rear direction of the collection tank **40.**

There is no particular limitation on the material of the first partition **80,** the second partition **81,** and the third partition **82,** and it may be a metallic material, a resin material, or the like. When the shaping table **24,** the supply table **34,** and the collection table **44** are raised, the weight of the powder material **90** applies a force in the left-right direction on the first partition **80,** the second partition **81,** and the third partition **82.** The first partition **80,** the second partition **81,** and the third partition **82** preferably have sufficient strength against this force. The first partition **80,** the second partition **81,** and the third partition **82** are preferably made of a material to which the powder material **90** is unlikely to adhere in order to reduce the influence on the work of collecting the powder material 90.

As shown in FIG. **4****,** magnets **84** are attached to surfaces of the horizontal portions **80A, 81A, and 82A** of the first partition **80,** the second partition **81,** and the third partition **82** that are in contact with the mounting section **10B** of the housing **10.** The first partition **80,** the second partition **81,** and the third partition **82** are secured to the housing **10** by the magnets **84** so that they can be attached and detached. When the head unit **60** reciprocates in the front-rear direction X to form the hardened layer **91,** if the first partition **80,** the second partition **81,** and the third partition **82** are attached to the housing **10,** the first partition **80,** the second partition **81,** and the third partition **82** interfere with the reciprocating motion of the support member **70.** Therefore, the shaping of the three-dimensional shaped object **92** is performed with the first partition **80,** the second partition **81,** and the third partition **82** removed. By thus removing the first partition **80,** the second partition **81,** and the third partition **82,** it is possible to avoid adverse influence on the shaping of the three-dimensional shaped object **92.** After completion of the shaping of the three-dimensional shaped object **92,** the first partition **80,** the second partition **81,** and the third partition **82** are attached when collecting the powder material **90.**

Note that while the first partition **80,** the second partition **81,** and the third partition **82** are separate in the present embodiment, two of them may be integrated and the other one may be separate. The first partition **80,** the second partition **81,** and the third partition **82** may be integrated. One or two or more of the first partition **80,** the second partition **81,** and the third partition **82** may be formed by combining a plurality of partitions.

The configuration of the three-dimensional shaping apparatus **100** has been described above. Next, the operation of the three-dimensional shaping apparatus **100** will be described.

To shape the three-dimensional shaped object **92,** first, the shaping table **24** is lowered and the supply table **34** is raised by a predetermined thickness of the cross-sectional shape of the three-dimensional shaped object **92.** In this state, the support member **70** is moved forward. At this time, the bedding member **50** transports the powder material **90** on the supply table **34** to the shaping tank **20,** and beds the powder material **90** in the shaping space **20A** to form a powder material layer. An excess amount of the powder material **90** in the shaping tank **20** is pushed by the bedding member **50** to be collected in the collection tank **40.** As the support member **70** moves in the front-rear direction X, a hardening liquid is discharged from the line heads **62** onto the powder material layer, thereby forming the hardened layer **91,** and shaping a desired cross-sectional shape. This operation is repeated, thereby shaping a three-dimensional shaped object **92.**

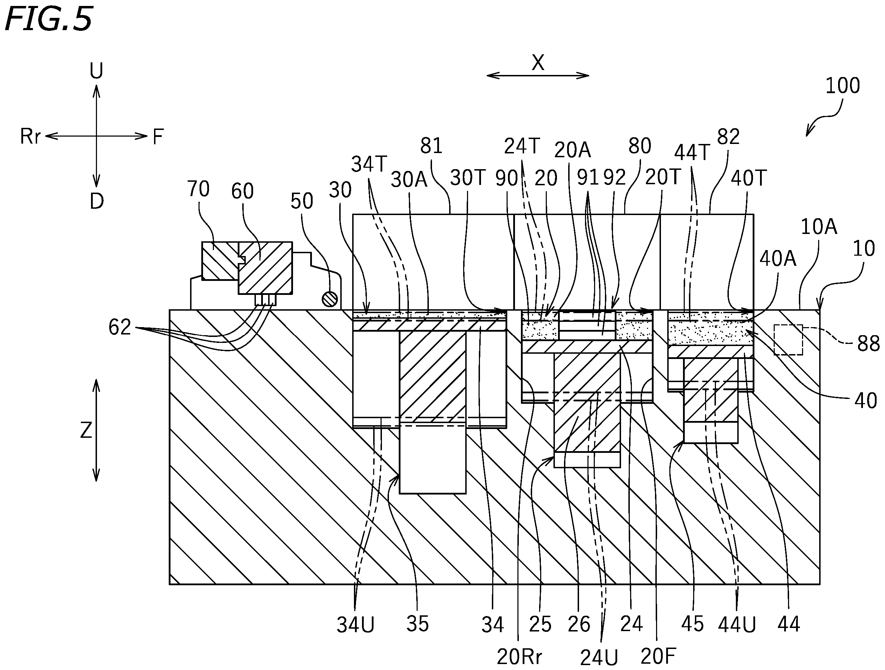

As shown in FIG. **5****,** when the shaping of the three-dimensional shaped object **92** is completed, the shaping table **24** is lowered below the first opening **20T** of the shaping tank. At this time, the shaping space **20A** is filled with the powder material **90.** In this state, the operator attaches the first partition **80,** the second partition **81,** and the third partition **82** to the left and right mounting sections **10B** of the housing **10.**

When the shaping of the three-dimensional shaped object **92** is completed, the operator lowers the supply table **34** and raises the shaping table **24** and the collection table **44** (see FIG. **2**). When the shaping table **24** is raised, the three-dimensional shaped object **92** and the excess powder material **90** on the shaping table **24** are raised. At this time, there is concern that the excess powder material **90** may spill out of the shaping tank **20.** However, according to the present embodiment, the first partition **80** prevents the powder material **90** from spilling out of the shaping tank **20.** When the collection table **44** is raised, the excess powder material **90** on the collection table **44** is raised. At this time, there is concern that the excess powder material **90** may spill out of the collection tank **40.** However, according to the present embodiment, the third partition **82** prevents the powder material **90** from spilling out of the collection tank **40.** Next, the operator takes out the three-dimensional shaped object **92.** As a result, the excess powder material **90** is left on the shaping table **24.** The excess powder material **90** is left also on the collection table **44.** The operator collects the remaining powder material **90** left on the shaping table **24** and on the collection table **44** by pushing the powder material into the supply tank **30** by hand or with a scoop or the like. Since the excess powder material **90** is located at an equivalent or greater height compared to the first opening **20T** of the shaping tank **20** and the third opening **40T** of the collection tank **40,** the operator can collect the powder material **90** in the supply tank **30** simply by moving the scoop or the like horizontally. The powder material **90** can be collected in the supply tank **30** without having to lift the scoop or the like from inside of the shaping tank **20** and inside of the collection tank **40.**

With the three-dimensional shaping apparatus **100** of the present embodiment, after completion of the shaping of the three-dimensional shaped object **92,** the first partition **80,** the second partition **81,** and the third partition **82** are attached so that the excess powder material **90** can be raised to a relatively high position without spilling. Therefore, the powder material **90** can be easily returned to the supply tank **30** by pushing the powder material **90** to one side in the horizontal direction with a scoop or the like, for example. There is no need for the work of lifting a scoop or the like from inside the shaping tank **20.** Thus, it is possible to reduce the burden of and increase the efficiency of the work of collecting the powder material **90** in the supply tank **30.**

With the three-dimensional shaping apparatus **100** according to the present embodiment, the first partition **80** extends upward relative to the first opening **20T** of the shaping tank **20.** Therefore, when collecting the powder material **90,** the powder material **90** on the shaping table **24** can be raised to a higher position without spilling. Therefore, it is possible to further reduce the burden of and further increase the efficiency of the work of collecting the powder material **90.**

With the three-dimensional shaping apparatus **100** according to the present embodiment, the second partition **81** extends upward relative to the second opening **30T** of the supply tank **30.** Therefore, when collecting the powder material **90,** even if the powder material **90** deposits at a position higher than the second opening **30T** of the supply tank **30,** the powder material **90** is prevented from spilling out of the supply tank **30.** Therefore, it is possible to increase the efficiency of the work of collecting the powder material **90.**

With the three-dimensional shaping apparatus **100** according to the present embodiment, the third partition **82** extends upward relative to the third opening **40T** of the collection tank **40.** Therefore, when collecting the powder material **90,** the powder material **90** on the collection table **44** can be raised to a higher position without spilling. Therefore, it is possible to further reduce the burden of and further increase the efficiency of the work of collecting the powder material **90.**

With the three-dimensional shaping apparatus **100** according to the present embodiment, the first partition **80,** the second partition **81,** and the third partition **82** are each configured so that they can be attached and detached. Therefore, the first partition **80,** the second partition **81,** and the third partition **82** can be removed during the shaping of the three-dimensional shaped object **92.** After completion of the shaping of the three-dimensional shaped object **92,** the first partition **80,** the second partition **81,** and the third partition **82** are attached when collecting the powder material **90.** Thus, it is possible to avoid adverse influence on the shaping of the three-dimensional shaped object **92,** and increase the efficiency of the collecting work when collecting the powder material **90.**

With conventional techniques, after shaping a three-dimensional shaped object, it was necessary to remove the excess powder material around the three-dimensional shaped object and take out the three-dimensional shaped object from inside the shaping tank **20.** The operator needed to perform such work in a deep crouched posture. However, with the three-dimensional shaping apparatus **100** according to the present embodiment, the shaping table **24** is raised after completion of the shaping of the three-dimensional shaped object **92,** so the three-dimensional shaped object **92** can be raised to a relatively high position. Therefore, the operator can remove the excess powder material around the three-dimensional shaped object **92** without assuming a deep crouching posture. In addition, there is no need for the work of lifting the three-dimensional shaped object **92** from inside the shaping tank **20.** Thus, it is possible to further reduce the burden of and increase the efficiency of the work to take out the three-dimensional shaped object **92.**

One embodiment of the present embodiment has been described above. However, the embodiment described above is merely an example, and the present invention can be carried out in various other forms.

In the embodiment described above, the first partition **80,** the second partition **81,** and the third partition **82** are separate, but two of them may be integrated and the other one may be separate. The first partition **80,** the second partition **81,** and the third partition **82** may be integrated. If the partitions are integrated, there is no gaps therebetween, and it is possible to prevent the powdered material **90** from spilling through the gaps. In addition, if the partitions are integrated, multiple partitions can be attached simultaneously in a single action. Since this reduces the number of operations for attaching the partitions, it is possible to facilitate and increase the efficiency of the work of attaching partitions. On the other hand, when the first partition **80,** the second partition **81,** and the third partition **82** are separate, partitions can be attached only at locations where there is concern that powder material **90** may spill. For example, where the powder material is not collected from the collection tank **40,** the first partition **80** and the second partition **81** can be attached to collect the powder material from the shaping tank **20** into the supply tank **30.** In this case, the work of attaching the third partition **82** can be omitted, and it is possible to increase the efficiency of the work. When the first partition **80,** the second partition **81,** and the third partition **82** are separate, the size of each partition is smaller and lighter, thereby facilitating the handling thereof. Note that each of the first partition **80,** the second partition **81,** and the third partition **82** does not need to be a single member. The first partition **80,** the second partition **81,** or the third partition **82** may be formed by a combination of multiple members.

While the first partition **80,** the second partition **81,** and the third partition **82** are secured to the mounting sections **10B** by the magnets **84** in the embodiment described above, the securing method may be other than the magnets **84.** For example, the horizontal portions **80A, 81A,** and **82A** of the first partition **80,** the second partition **81,** and the third partition **82,** and the mounting sections **10B** may be fixed with bolts. If the first partition **80,** the second partition **81,** and the third partition **82** are heavy enough not to be moved by a force in the left-right direction applied when collecting the powder material **90,** the securing mechanism may be optional. The first partition **80,** the second partition **81,** and the third partition **82** may be installed by simply being placed on the mounting sections **10B.**

In the embodiment described above, after completion of the shaping of the three-dimensional shaped object **92,** the three-dimensional shaped object **92** is taken out after the shaping table **24** is raised. However, the three-dimensional shaped object **92** may be taken out from the shaping tank **20** before the shaping table **24** is raised, and then the shaping table **24** may be raised.

### DESCRIPTION OF REFERENCE SIGNS

- 20: Shaping tank
- 24: Shaping table
- 25: First elevation device
- 30: Supply tank
- 80: First partition
- 81: Second partition
- 82: Third partition
- 84: Magnet
- 90: Powder material
- 91: Hardened layer
- 92: Three-dimensional shaped object
- 100: Three-dimensional shaping apparatus

## Claims

1. A three-dimensional shaping apparatus for shaping a three-dimensional shaped object by hardening a powder material to form a hardened layer and sequentially stacking such hardened layers, the three-dimensional shaping apparatus comprising:
a shaping tank in which the three-dimensional shaped object is shaped;
a shaping table that is arranged in the shaping tank and on which the powder material is placed;
an elevation device that is arranged in the shaping tank and that raises and lowers the shaping table between an upper position and a lower position;
a supply tank located on one side in a horizontal direction of the shaping tank that stores the powder material and supplies the powder material to the shaping tank; and
a first partition that is provided on the shaping tank and that extends in the horizontal direction and extends upward relative to the upper position of the shaping table.

2. The three-dimensional shaping apparatus according to claim 1, wherein:
the shaping tank has a first opening that is open upward; and
the first partition extends upward relative to the first opening.

3. The three-dimensional shaping apparatus according to claim 1 or 2, wherein:
the supply tank has a second opening that is open upward; and
the three-dimensional shaping apparatus comprises a second partition that is provided on the supply tank and that extends in the horizontal direction and extends upward relative to the second opening.

4. The three-dimensional shaping apparatus according to claim 3, wherein the first partition and the second partition are integrated.

5. The three-dimensional shaping apparatus according to claim 1 or 2, wherein:
the three-dimensional shaping apparatus comprises a collection tank that is located on the other side in the horizontal direction of the shaping tank and that collects the powder material from the shaping tank;
the collection tank has a third opening that is open upward; and
the three-dimensional shaping apparatus comprises a third partition that is provided on the collection tank and that extends in the horizontal direction and extends upward relative to the third opening.

6. The three-dimensional shaping apparatus according to claim 5, wherein the first partition and the third partition are integrated.

7. The three-dimensional shaping apparatus according to claim 1 or 2, wherein:
the supply tank has a second opening that is open upward;
the three-dimensional shaping apparatus comprises a second partition that is provided on the supply tank and that extends in the horizontal direction and extends upward relative to the second opening; and
the three-dimensional shaping apparatus comprises a collection tank that is located on the other side in the horizontal direction of the shaping tank and that collects the powder material from the shaping tank;
the collection tank has a third opening that is open upward; and
the three-dimensional shaping apparatus comprises a third partition that is provided on the collection tank and extends in the horizontal direction and extends upward relative to the third opening.

8. The three-dimensional shaping apparatus according to claim 7, wherein the first partition, the second partition, and the third partition are integrated.

9. The three-dimensional shaping apparatus according to claim 1, wherein the first partition is removably attached to the shaping tank.

10. The three-dimensional shaping apparatus according to claim 9, wherein one of the first partition and the shaping tank has a magnet, and the other one of the first partition and the shaping tank has a magnetic material that adheres to the magnet.

11. The three-dimensional shaping apparatus according to claim 3, wherein the second partition is removably attached to the supply tank.

12. The three-dimensional shaping apparatus according to claim 11, wherein one of the second partition and the supply tank has a magnet, and the other one of the second partition and the supply tank has a magnetic material that adheres to the magnet.

13. The three-dimensional shaping apparatus according to claim 5, wherein the third partition is removably attached to the collection tank.

14. The three-dimensional shaping apparatus according to claim 13, wherein one of the third partition and the collection tank has a magnet, and the other one of the third partition and the collection tank has a magnetic material that adheres to the magnet.
